# EUROPEAN PATENT SPECIFICATION

(11) **EP 1 970 294 B1**
(45) Date of publication and mention of the grant of the patent: **16.08.2017**
(21) Application number: 08446002.1
(22) Date of filing: 12.03.2008
(51) Int. Cl.: B62D 33/067, F16F 13/14

(54) **Elastic washer bushing, vehicle cabin suspension and the use of such a washer bushing**
Elastische Scheibe, Fahrzeugkabinenaufhängung und Verwendung dieser Scheibe
Rondelle élastique, suspension de cabine de véhicule et utilisation d'une telle rondelle

(30) Priority: 13.03.2007 SE 0700623
(43) Date of publication of application: 17.09.2008
(73) Proprietor: Scania CV AB (publ), 151 87 Södertälje (SE)
(72) Inventor: Olsson, Ulf, 821 43, Bollnäs (SE); Catovic, Rade, 169 40, Solna (SE)
(74) Representative: Scania CV AB

(56) References cited:
- EP-A1- 0 768 231
- EP-A1- 1 154 913
- JP-A- 2009 018 707
- JP-U- S58 153 173

## Description

### TECHNICAL AREA

The present invention concerns a washer bushing of rubber material, designed as a disc-shaped washer with a hole or a cavity, which bushing is arranged to be mounted between two components that are pivotally coupled through a coupling and surrounding a shaft that runs through the hole or the cavity and that runs through the said components. The invention concerns also a vehicle cabin suspension provided with such a washer bushing and the use of such a washer bushing.

### BACKGROUND

Regulations that limit the length of vehicles that may be driven on public roads are in force in many parts of the world. There is at the same time a wish among users of commercial vehicles to be able to transport as large a load as possible: thus manufacturers of commercial vehicles have powerful reasons for making the cabin of such a vehicle as short as possible in order for it to be possible to make the load platform or load compartment as long as possible. This means that the space available inside the body of the vehicle is limited for different components that are part of the vehicle, and, more specifically, that there is a short distance between the front hatch of the commercial vehicle and the arrangements that constitute the attachment of the cabin to the vehicle, and its suspension with respect to the vehicle chassis.

The arrangements for the attachment of the cabin of a commercial vehicle to its chassis perform many functions and consist of many components, with the aims of, among others, providing high comfort during travel, through, for example, providing suspension, shock absorption, stabilizing and vibration damping. There are, to be more specific, one or several disc-shaped rubber bushings between the forward cabin suspension attachment point at a chassis and its surfaces of contact with the inner surface of the fork on the link of the stabilizer of cabin . It is intended that this bushing insulate the cabin from horizontal vibrations in a direction that is perpendicular to the direction of travel of the commercial vehicle, which vibrations arise from sources that include the engine and the suspension of the wheels, this being the subject of the present invention. An example of a front bearing for tilt cab is described in EP 0768231.

The cabin of the vehicle and thus also the front hatch of the cabin of the vehicle are attached to the chassis in a manner that is sprung and mobile, and thus there may arise collisions or abrasion of metal against metal at those locations at which the inner surface of the front hatch is in the immediate vicinity of the various parts of the chassis, for example, springs, stabilizers and the attachment arrangements of these. This abrasion can cause noise, wear of surface treatment, and corrosion.

Several different designs of stopper for the cabin suspension are described in the patents WO 00/47455, WO 98/54044 and SU 1481130 A1. One conventional method of avoiding or reducing abrasion between the front hatch and the cabin suspension would be to mount one or several stoppers of a rubber material on one of the parts, these stoppers having such a location that they prevent the two metal surfaces coming into contact with each other. However, stoppers increase the cost of manufacture of the commercial vehicle, and they increase in particular the cost of mounting the extra components that the stoppers constitute, as well as the costs of spare part storage and system maintenance.

### DESCRIPTION OF THE INVENTION

One aim of the invention is to provide the functionality of a stopper between the front hatch and the cabin suspension on a commercial vehicle in a manner that does not require any additional components or any additional assembly steps during the manufacture of the said commercial vehicle. This is achieved through the characteristics that are specified in the attached patent claims.

According to an examination of the invention, side bushings are designed with the aim of insulating in a known manner the cabin from vibrations of the chassis, and which are brought into contact with the forward cabin suspension attachments for the chassis and the corresponding attachments for the stabilizer of cabin, in such a manner that a part of the relevant side bushing has such an extent in front of the relevant cabin suspension attachment that it prevents a front hatch that is in motion from coming into contact with the cabin suspension attachment or with any other component that is connected with the cabin suspension attachment. A stopper for the said front hatch is obtained through this design.

### BRIEF DESCRIPTION OF DRAWINGS

Figure 1 is a view obliquely from the front and above of a cabin suspension provided with a washer bushing according to the invention, and an enlarged part showing the washer bushing; and
Figure 2 is a view corresponding to Figure 1 with parts that have been separated; and
Figure 3 is a schematic side view of a cabin suspension with a washer bushing according to the invention, from which drawing parts have been removed.

### DETAILED DESCRIPTIONS OF EMBODIMENTS

The term "washer bushing" is used in this patent application to denote a disc-shaped damping means of rubber, intended to be mounted between two components and having its two surfaces of greatest area turned towards and in contact each with one component, in order to prevent vibrations in one of the components being transmitted to the second component. One aim of a washer bushing may also be to seal such that dirt and moisture cannot penetrate between the said components. The term "side bushing" is used to denote a washer bushing as described above, mounted between two components in a vehicle that has a direction of travel, and intended to insulate the said components, where the vibrations or motion that it is preferable that the bushing is to damp take place in the horizontal plane, perpendicular to the direction of travel of the vehicle, that is, in a sideways direction relative to the direction of travel of the vehicle. The term "rubber" is used in this description to denote an elastic, rubber-like material, obtained either from a plant or by synthetic manufacture, in a foam form or in a solid form, such as polyurethane, latex, and silicone rubber.

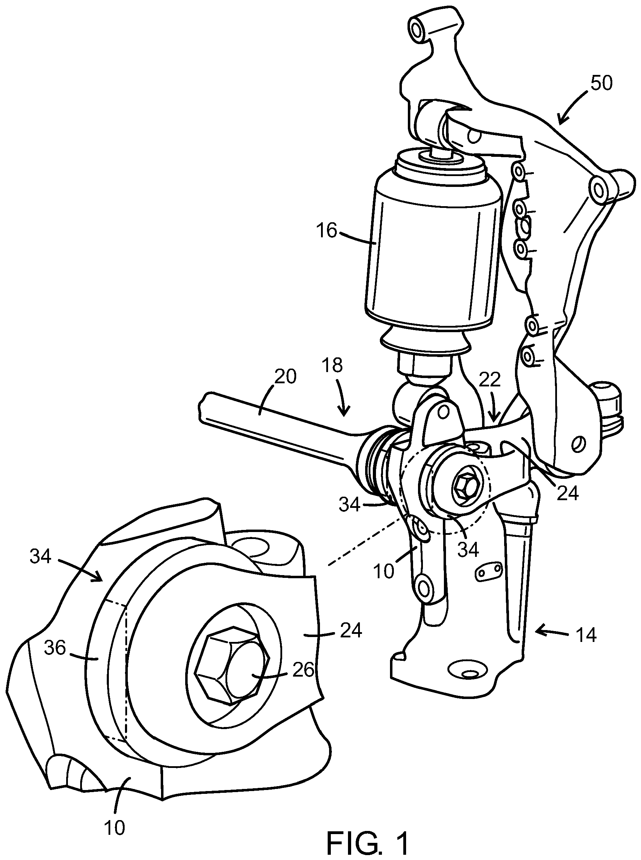

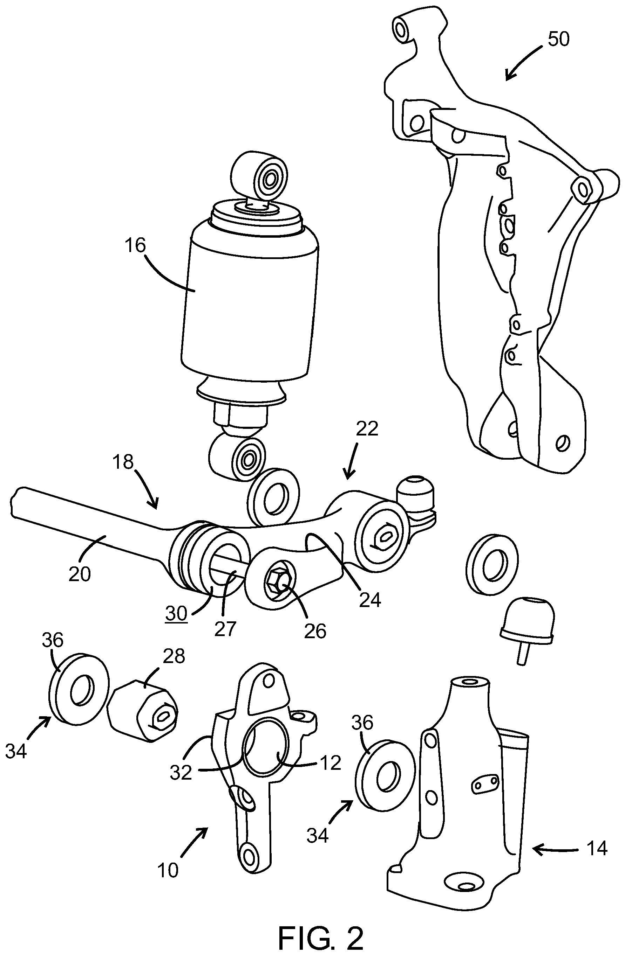

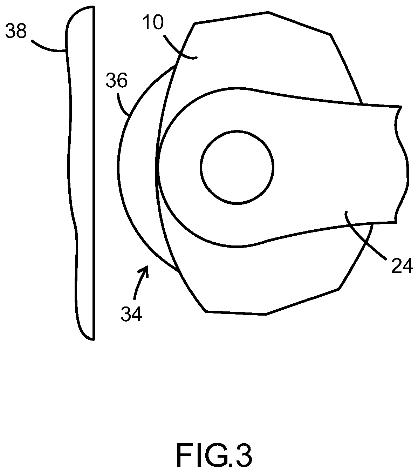

Figures 1 and 2 show an example of an embodiment, where a side bushing on a forward stabilizer for cabin is designed in such a manner that it functions as a stopper. Figure 2, in particular, shows a spring attachment 10 with an opening 12 provided with bearings, in a cabin tower 14. A cabin suspension spring 16 is connected to the spring attachment 10, which spring in turn is connected to a torpedo fixture 50 for coupling with a vehicle cabin, not shown in the drawings. A stabilizer 18, consisting of a torsion rod 20, a link 22 and a fork 24 is pivotally coupled with the spring attachment 10 in such a manner that the fork 24 surrounds the spring attachment 10 and is united with the same by a bolt 26, which constitutes also the axis of rotation of the joint. A collared bushing 28 is located around that part of the shaft 27 of the bolt 26 that is located within the opening provided with bearings 12 of the spring attachment and in contact with the inner surface of the opening provided with bearings, in order to insulate the spring attachment 10 from the stabilizer 18 with respect to vibrations that are directed radially towards the opening 12. A washer bushing 34 is located between the inner surface 30 of the relevant leg of the fork and the sides 32 of the spring attachment. This washer bushing constitutes a side bushing. The outer diameter of the side bushing 34 has not been adapted to the size of the inner surface 30 of the leg of the fork, nor to that of the sides 32 of the spring attachment: it has instead been selected such that its outer edge 36 is located closer to the front hatch 38 (see Figure 3) than any other of the components that are part of the cabin suspension or the chassis. This is shown clearly in the enlarged part of Figure 1 that has been extracted from the complete drawing.

It is not necessary that the washer bushing 34 be ring-shaped as shown in the drawings: it can be constructed in another manner. It may, for example, have a part that protrudes in a direction towards the front hatch 38. Neither is it necessary that the washer bushing 34 be mounted as a side bushing for a stabilizer: it may be mounted in essentially any other location at which there is a need for the mounting of a washer bushing and at which there is a risk of collision or abrasion between two surfaces.

The detailed description given above is primarily intended to facilitate understanding, and no unnecessary limitations of the invention are to be derived from this description.

## Claims

1. A washer bushing (34) of rubber material, designed as a disc-shaped washer with an opening or a cavity, which bushing (34) is arranged to be mounted between two components (10, 18) that are pivotally coupled to each other by a coupling and surrounding a shaft (27) that runs through the opening or the cavity and that runs through the said components (10, 18), **characterised in that** the bushing (34) is designed to protrude outside of the components (10, 18) and thus serve as a stopper for a surface (38) that is mobile relative to the components (10, 18) that are coupled by the coupling, wherein one of the components comprises a stabilizer (18), and
**in that** the bushing is intended to be connected to a forward stabilizer (18) of a commercial vehicle cabin, and the mobile surface is a front hatch (38) on the said commercial vehicle cabin.

2. The washer bushing according to claim 1, whereby the bushing (34) is manufactured from foamed polyurethane plastic.

3. The washer bushing according to either claim 1 or 2, whereby the bushing (34) is ring-shaped, with an inner diameter that is insignificantly greater than the diameter of the said shaft, and an outer diameter that is sufficiently large that its outer edge prevents the said coupled components from coming into contact with the said mobile surface.

4. The washer bushing according to any one of claims 1-3, whereby the pivoted coupling is a bolted coupling and whereby the shaft is a bolt shaft of the coupling.

5. A vehicle cabin suspension arranged with a washer bushing (34) according to any one of the preceding claims.

6. The use of a washer bushing according to any one of claims 1-4 as a stopper between a forward stabilizer (18) and a front hatch (38) of a vehicle cabin.

## Patentansprüche

1. Scheibenbuchse (34) aus Gummimaterial, die scheibenförming mit einer Öffnung oder einem Hohlraum ausgebildet ist, wobei die Buchse (34) zwischen zwei Bauteilen (10, 18) einzubauen ist, die durch eine Kupplung drehbar miteinander gekoppelt sind und einen Schaft (27) umgeben, der durch die Öffnung oder den Hohlraum und durch die Bauteile (10, 18) verläuft,
**dadurch gekennzeichnet, dass** die Buchse (34) so ausgebildet ist, dass sie aus den Bauteilen (10, 18) hervorsteht und so als Anschlag für eine Oberfläche (38) dient, die relativ zu den durch die Kupplung gekoppelten Bauteilen (10, 18) beweglich ist, wobei eines der Bauteile einen Stabilisator (18) aufweist, und
dass die Buchse mit einem vorderen Stabilisator (18) der Kabine eines Nutzfahrzeugs verbunden werden soll, und die bewegliche Oberfläche eine Bugklappe (38) der Kabine des Nutzfahrzeugs ist.

2. Buchse nach Anspruch 1, wobei die Buchse (34) aus Polyurethan-Schaumstoff besteht.

3. Buchse nach Anspruch 1 oder 2, wobei die Buchse (34) ringförmig ist und einen Innendurchmesser aufweist, der unwesentlich größer ist als der Durchmesser des Schafts, und einen Außendurchmesser aufweist, der hinreichend groß ist, so dass sein Außenrand verhindert, dass die gekoppelten Bauteile in Kontakt mit der beweglichen Oberfläche kommen.

4. Buchse nach einem der Ansprüche 1 bis 3, wobei die drehbare Kopplung eine Bolzenkupplung und der Schaft ein Bolzenschaft der Kupplung ist.

5. Fahrzeugkabinenaufhängung mit einer Buchse (34) nach einem der vorigen Ansprüche.

6. Verwendung einer Buchse nach einem der Ansprüche 1 bis 4 als Anschlag zwischen einem vorderen Stabilisator (18) und einer Bugklappe (38) der Fahrzeugkabine.

## Revendications

1. Bague de rondelle (34) en matériau en caoutchouc, conçu sous la forme d'une rondelle en forme de disque avec une ouverture ou une cavité, cette bague (34) étant configurée de façon à être montée entre deux composants (10, 18) qui sont couplés de façon à pouvoir pivoter l'un par rapport à l'autre par un couplage, et entourant un arbre (27) qui s'étend à travers l'ouverture ou la cavité et qui s'étend à travers lesdits composants (10, 18), **caractérisé en ce que** la bague (34) est conçue de façon à faire saillie à l'extérieur des composants (10, 18), et, par conséquent, à jouer le rôle d'élément d'arrêt pour une surface (38) qui est mobile par rapport aux composants (10, 18) qui sont couplés par le couplage, l'un des composants comprenant un stabilisateur (18), et
**en ce que** la bague est conçue de façon à être reliée à un stabilisateur avant (18) d'une cabine de véhicule commercial, et **en ce que** la surface mobile est une écoutille avant (38) sur ladite cabine de véhicule commercial.

2. Bague de rondelle selon la revendication 1, dans lequel la bague (34) est fabriquée à partir de matière plastique en mousse de polyuréthane.

3. Bague de rondelle selon l'une ou l'autre de la revendication 1 ou 2, dans lequel la bague (34) est de forme annulaire, avec un diamètre intérieur qui n'est pas significativement supérieur au diamètre dudit arbre, et un diamètre extérieur qui est suffisamment grand pour que son bord extérieur empêche lesdits composants couplés de venir en contact avec ladite surface mobile.

4. Bague de rondelle selon l'une quelconque des revendications 1 à 3, dans lequel le couplage pivotant est un couplage boulonné, et grâce auquel l'arbre est un arbre de boulon du couplage.

5. Suspension de cabine de véhicule agencée avec une bague de rondelle (34) selon l'une quelconque des revendications précédentes.

6. Utilisation d'une bague de rondelle selon l'une quelconque des revendications 1 à 4 comme élément d'arrêt entre un stabilisateur avant (18) et une écoutille avant (38) d'une cabine de véhicule.
